# EUROPÄISCHE PATENTANMELDUNG

(11) **EP 1 857 187 A1**
(43) Veröffentlichungstag der Anmeldung: **21.11.2007**
(21) Anmeldenummer: 07008050.2
(22) Anmeldetag: 20.04.2007
(51) Int. Cl.: B05B 12/12, B05B 13/04, B05C 5/02

(54) **Anlage zum Beleimen von zum Beschichten mit einer Folie vorgesehenen Oberflächen eines Werkstücks aus gepresstem Holzwerkstoff**

(30) Priorität: 17.05.2006 DE 202006008005 U
(71) Anmelder: Robert Bürkle GmbH, 72250 Freudenstadt (DE)
(72) Erfinder: Huber, Reinhard, 72250 Freudenstadt-Dietersweiler (DE)
(74) Vertreter: Kaiser, Magnus

(57) **Zusammenfassung**

Die Erfindung betrifft eine Anlage zum Beleimen von zum Beschichten mit einer Folie vorgesehenen Oberflächen eines Werkstücks aus gepresstem Holzwerkstoff, umfassend eine Klebstoff-Spritzvorrichtung 2 zum Auftragen von flüssigem Klebstoff auf die zu beleimende Oberfläche des Werkstücks, einen Roboter 1, der die Klebstoff-Spritzvorrichtung 2 über die zu beleimende Oberfläche des Werkstücks führt, eine Transportvorrichtung 3 zum Transportieren von auf diese aufgelegten Werkstücken zu einer am Roboter 1 angeordneten Beleimungsstation 6 und von dieser weg, eine Abtastvorrichtung 8 zum Abtasten der Kontur und zum Detektieren von Konturdaten der auf der Transportvorrichtung 3 aufliegenden und zur Beleimungsstation 6 zu transportierenden Werkstücke sowie eine Steuereinheit 11 zum Steuern des Roboters 1 und der Klebstoff-Spritzvorrichtung 2, wobei die Steuereinheit 11 mit der Abtastvorrichtung 8 verbunden ist und die Klebstoff-Spritzvorrichtung 2 sowie den Roboter 1 anhand der von der Abtastvorrichtung 8 erhaltenen Konturdaten steuert. Die Erfindung ist durch eine Abtastvorrichtung 8 gekennzeichnet, die außer der Kontur der Werkstücke auch deren Topographie abtastet und Topographie-Daten detektiert, während die Steuereinheit 11 die Klebstoff-Spritzvorrichtung 2 und den Roboter 1 anhand der Topographie-Daten steuert.

## Beschreibung

Die Erfindung betrifft eine Anlage zum Beleimen von zum Beschichten mit einer Folie vorgesehenen Oberflächen eines Werkstücks aus gepresstem Holzwerkstoff nach dem Oberbegriff des Anspruchs 1.

Demnach enthält eine Anlage der vorliegenden Art eine Klebstoff-Spritzvorrichtung zum Auftragen von flüssigem Klebstoff auf die zu beleimende Oberfläche des Werkstücks, einen Roboter, der die Klebstoff-Spritzvorrichtung über die zu beleimende Oberfläche des Werkstücks führt, eine Transportvorrichtung zum Transportieren von auf dieser aufgelegten Werkstücken zu einer am Roboter angeordneten Beleimungsstation und von dieser weg, eine Abtastvorrichtung zum Abtasten der Kontur und zum Detektieren von Konturdaten der auf der Transportvorrichtung aufliegenden und zur Beleimungsstation zu transportierenden Werkstücke, sowie eine Steuereinheit zum Steuern des Roboters und der Klebstoff-Spritzvorrichtung. Die Steuereinheit ist mit der Abtastvorrichtung verbunden, und sie steuert die Klebstoffspritzvorrichtung und den Roboter anhand der von der Abtastvorrichtung erhaltenen Konturdaten.

Eine solche bekannte Anlage erkennt also die Kontur eines auf der Transportvorrichtung befindlichen Werkstücks und steuert dann den Roboter und gegebenenfalls die Klebstoff-Spritzvorichtung so, dass diese Kontur und die von ihr umschriebene Fläche gleichmäßig und ganzflächig mit Klebstoff versehen wird.

Durch diese Automatisierung des Klebstoffauftragens vor dem Aufbringen einer Folie auf das Werkstück ergeben sich gegenüber dem manuellen Aufbringen von Klebstoff entscheidende Vorteile. Neben dem Entfall der durch die manuelle Arbeit naturgemäß hohen Personalkosten arbeitet der Roboter insbesondere an den Kanten des Werkstücks genauer, so dass weniger Overspray und dementsprechend weniger Emission von Klebstoff-Nebel sowie ein niedrigerer Verbrauch von Klebstoff resultiert. Auch die Reproduzierbarkeit der Ergebnisse ist bei einem automatisierten Klebstoffauftrag durch Roboter naturgemäß höher.

Auf der anderen Seite hat sich gezeigt, dass eine solche bekannte Anlage beim Auftragen von Klebstoff auf Werkstücke aus gepresstem Holzwerkstoff, also insbesondere Möbel-Werkstücke aus mitteldichten Faserplatten, unbefriedigende Ergebnisse liefert, wenn die Werkstücke eine Profilierung der zu beleimenden Oberfläche aufweisen. Insbesondere an Ausfräsungen, die bei Möbelfronten üblich sind, führt das automatische Beleimen durch eine Anlage der eben beschriebenen Art mitunter zu unbrauchbaren Ergebnissen, da die aufgebrachte Folie in den Vertiefungen der Werkstückoberfläche nicht stabil genug an dieser haftet. In diesen Fällen ist bislang die manuelle Beleimung noch immer nicht zu ersetzen.

Ausgehend von diesem Stand der Technik liegt der Erfindung die Aufgabe zugrunde, eine Anlage der eingangs genannten Art zu verbessern, so dass auch bei Werkstücken mit profilierter zu beleimender Oberfläche einwandfreie Beleimungsergebnisse erzielt werden können.

Gelöst ist diese Aufgabe durch eine Anlage mit den Merkmalen des Anspruchs 1. Vorteilhafte Ausgestaltungen und Weiterbildungen der Erfindung sind in den Ansprüchen 2-11 niedergelegt.

Dementsprechend wird die eingangs genannte Anlage erfindungsgemäß dadurch modifiziert, dass die Abtastvorrichtung für die zur Beleimungsstation zu transportierenden Werkstücke außer der Kontur der Werkstücke auch deren Topographie abtastet und Topographie-Daten detektiert, während die Steuereinheit der Anlage die Klebstoff-Spritzvorrichtung und den Roboter anhand der Topographie-Daten steuert.

Erfindungsgemäß ist erkannt worden, dass Werkstücke aus gepresstem Holzwerkstoff, insbesondere mitteldichte Faserplatten, an denjenigen Stellen, an denen Ausfräsungen in der Werkstückoberfläche sind, eine höhere Saugfähigkeit besitzen und dementsprechend mehr Klebstoff aufnehmen, der dann nicht mehr an der Oberfläche zur Herstellung einer sauberen Verbindung mit der aufzutragenden Folie zur Verfügung steht. Denn Werkstücke aus gepresstem Holzwerkstoff werden in Heißpressen mit planparallelen Platten hergestellt, wodurch das Material an den beiden Platten, also an den Oberflächen, höher verdichtet wird als im Inneren des Werkstücks. Wird bei der Profilierung der so hergestellten Holzwerkstoffplatte nachträglich an Ausfräsungen die höher verdichtete Randschicht des Werkstücks entfernt, kommt an diesen Stellen das niedriger verdichtete Material des Werkstücks mit dem Klebstoff in Berührung, so dass sich das eben genannte Problem ergibt, dass die Ausfräsungen mehr Klebstoff aufnehmen, als die übrigen Bereiche der Werkstückoberfläche.

Beim bisher üblichen manuellen Auftragen von Klebstoff wurde dies vom Bediener intuitiv dadurch ausgeglichen, dass er in denjenigen Bereichen der Werkstückoberfläche, die mehr Klebstoff aufnehmen, also in den Ausfräsungen, mehr Klebstoff aufgetragen hat, so dass sich letztendlich ein gleichmäßiges Beleimungsbild über die gesamte Werkstückoberfläche ergab. Dies wird nun durch die erfindungsgemäße Anlage automatisch nachvollzogen, denn anhand der vor der Beleimungsstation detektierten Topographie-Daten des Werkstücks können der Roboter und/oder die Klebstoff-Spritzvorrichtung so gesteuert werden, dass Vertiefungen in der Oberfläche des Werkstücks mit entsprechend mehr Klebstoff beleimt werden als die übrigen Bereiche. Dies kann beispielsweise durch einen wiederholten Auftrag, durch eine langsamere Bewegung des Roboters in ausgewählten Bereichen und/oder durch Verändern der Durchflussmenge oder des Spritzstrahls der Klebstoff-Spritzvorrichtung erfolgen.

Als Abtastvorrichtung zum Abtasten der Topographie der Werkstücke kann ein digitales Kamerasystem verwendet werden. Dieses hat jedoch mitunter Probleme wegen der Einfärbung des Transportsystems durch Kleber-Overspray, wodurch der für die Kamera notwendige Kontrast des aufgenommenen Bildes abnimmt. Dementsprechend ist es vorteilhaft, als Abtastvorrichtung eine Laser-Scanvorrichtung oder einen Lichtvorhang zu verwenden.

Der in der erfindungsgemäßen Anlage verwendete Roboter ist vorzugsweise ein Knickarm-Roboter mit mindestens fünf Freiheitsgraden. Ein solcher Roboter ist in der Lage, die Klebstoff-Spritzvorrichtung so entlang der detektierten Topographie der Werkstückoberfläche zu führen, dass der Klebstoffauftrag immer in Richtung der Normalen der momentan zu beleimenden Werkstückoberfläche erfolgt, wobei der Abstand zur Werkstückoberfläche konstant gehalten wird.

Eine besonders bevorzugte Ausgestaltung der erfindungsgemäßen Anlage besteht darin, dass die Abtastvorrichtung aus den Topographie-Daten Bilddaten zur Erzeugung eines Topographie-Bildes des Werkstücks generiert, welches gegebenenfalls angezeigt und kontrolliert werden kann. Die Steuereinheit ordnet dann vorzugsweise den von der Abtastvorrichtung erhaltenen Bilddaten nach einem vorgegebenen Algorithmus Ortskoordinaten zur Steuerung des Roboters zu und generiert dementsprechend ein Steuerprogramm für den Roboter und die Klebstoff-Spritzvorrichtung. Die digitalen Bilddaten in digitale Ortsdaten umzuwidmen, um ein entsprechendes Steuerprogramm für den Roboter und/oder die Klebstoff-Spritzvorrichtung zu generieren, stellt eine besonders einfache und schnell zu realisierende Kopplung der Abtastvorrichtung und der Steuereinheit dar.

Der Roboter und die Beleimungsstation sind zweckmäßigerweise mit einer Umhausung versehen, so dass eine Klebstoffimission in die Umgebung nicht stattfindet und gegebenenfalls die Belüftung der Umhausung auch über Filter erfolgen kann. Wenn die Beleimungsstation zusätzlich mit einer Klebstoffabsaugung für etwaigen Overspray versehen ist, ist nicht zu befürchten, dass Klebstoff-Nebel in die Umgebung der erfindungsgemäßen Anlage gelangt, so dass diese unter Arbeitssicherheitsaspekten völlig unbedenklich ist.

Die Transportvorrichtung der erfindungsgemäßen Anlage besteht vorzugsweise im Wesentlichen aus einem Tisch, der zwischen einer Beladungsstation und der Beleimungsstation verfahrbar ist. Hierdurch wird gewährleistet, dass die relative Lage des Werkstücks auf dem Tisch zwischen dem manuellen Auflegen desselben und der Beleimungsstation unverändert bleibt. Die Abtastvorrichtung muss dann nur die Lage und Topographie des Werkstücks relativ zum Tisch detektieren, um eindeutige Ortskoordinaten für die Beleimung erhalten zu können. Bevorzugterweise sind zwei solche Tische vorgesehen, die abwechselnd zur Beleimungsstation verfahrbar sind. Dementsprechend kann, noch während der Beleimungsvorgang läuft, der jeweils andere Tisch mit Werkstücken beladen und gegebenenfalls zuvor beleimte Werkstücke entnommen werden.

Ein Ausführungsbeispiel der vorliegenden Erfindung wird im Folgenden anhand der beigefügten Zeichnungen näher beschrieben und erläutert. Es zeigen:
- Figur 1: eine Seitenansicht einer erfindungsgemäßen Anlage;
- Figur 2: eine Draufsicht auf die in Figur 1 dargestellte Anlage.

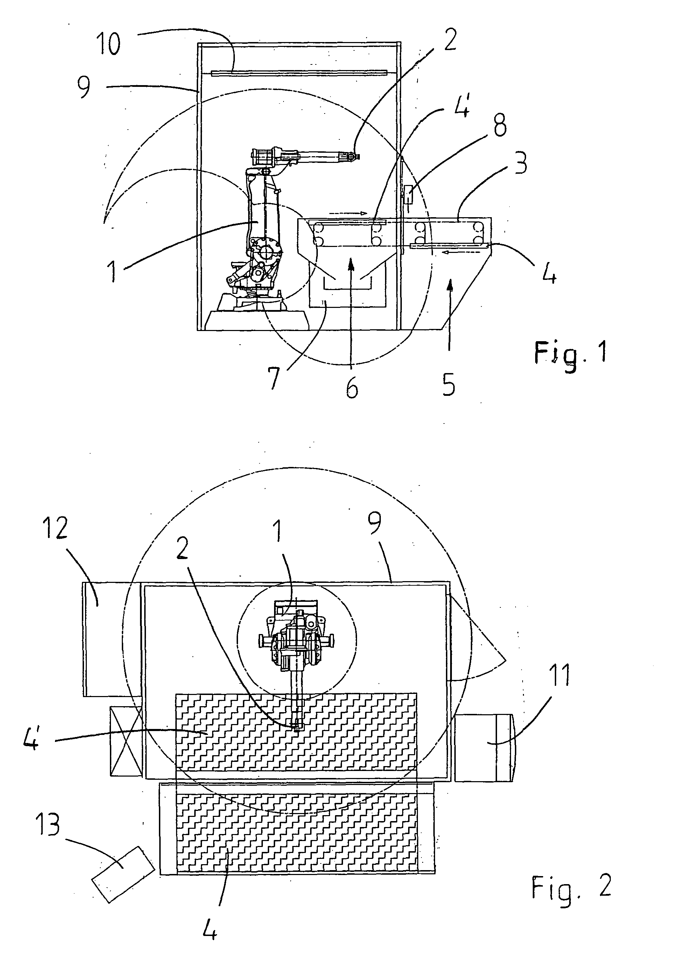

Die in Figur 1 sichtbaren Komponenten der erfindungsgemäßen Anlage sind: ein Knickarmroboter 1 mit einer Klebstoff-Spritzvorrichtung 2, die er in sechs Freiheitsgraden bewegen kann, eine Transportvorrichtung 3, die zwei Tische 4 und 4' zwischen einer Beladungsstation 5 und einer Beleimungsstation 6 hin und her bewegt, eine Klebstoffabsaugung 7 an der Beleimungstation 6, eine aus einer Laser-Scanvorrichtung bestehende Abtastvorrichtung 8 oberhalb der Transportvorrichtung 3, zwischen der Beladungsstation 5 und der Beleimungsstation 6, sowie eine Umhausung 9 mit Zuluftfilterdecke 10.

In der Draufsicht nach Figur 2 sind außerdem zu erkennen: eine Steuereinheit 11 zum Steuern des Roboters 1 und der Klebstoff-Spritzvorrichtung 2, ein Schaltschrank 12 sowie ein Bedienpanel 13 für den Bediener.

Das in den Figuren 1 und 2 dargestellte Ausführungsbeispiel einer erfindungsgemäßen Anlage ist von einer einzigen Person zu bedienen. In der geschlossenen Umhausung 9 mit zu- und Abluft sowie Kleberabsaugung 7 beleimt der Roboter 1 Werkstücke, die auf den Tisch 4 oder den Tisch 4' aufgelegt worden sind. Die Bedienperson legt ein oder mehrere Werkstücke in der Beladungsstation 5 auf den Tisch 4 und startet über das Bedienpanel 13 den Beleimungsvorgang. Die Transportvorrichtung 3 transportiert den Tisch 4 mit dem Werkstück bzw. den Werkstücken unter der Abtastvorrichtung 8 hindurch, wo Kontur, Lage und Topographie der Werkstücke detektiert und an die Steuereinheit 11 weitergegeben werden. Wenn der Tisch 4 in der Beleimungsstation 6 angekommen ist, steuert die Steuereinheit 11 den Roboter 1 sowie die Klebstoff-Spritzvorrichtung 2 so, dass die profilierte Oberfläche der Werkstücke gleichmäßig beleimt wird, und zwar unabhängig davon, ob die unterschiedlichen 0-berflächenbereiche verschieden saugfähig sind. Nach dem Beleimvorgang transportiert die Transportvorrichtung 3 den Tisch 4 wieder von der Beleimungsstation 6 in die Beladungsstation 5, wo die fertig beleimten Werkstücke dann manuell entnommen werden. Während dessen werden weitere Werkstücke, die auf den Tisch 4' aufgelegt worden sind, in der Beleimungsstation 6 vom Roboter 1 beleimt.

An die Klebstoff-Spritzvorrichtung 2 ist ein (hier nicht dargestellter) Materialdruckbehälter angeschlossen, wobei eine Durchflusskontrolle zur Klebstoff-Spritzvorrichtung 2 hin vorgesehen ist, um etwaige Förderfehler des Klebstoffs in Echtzeit zu erkennen, und in vorgegebenen Intervallen wird die Klebstoff-Spritzvorrichtung 2 vom Roboter 1 gereinigt. Aufgrund der geschlossenen Umhausung 9 mit Filter 10 ist die Bedienperson vor Klebstoffnebel geschützt, so dass insoweit keine weiteren Schutzmaßnahmen durch spezielle Kleidung und Atemmaske erforderlich sind. Die Anlage kann außerdem in normalen Produktionsräumen aufgestellt werden.

## Patentansprüche

1. Anlage zum Beleimen von zum Beschichten mit einer Folie vorgesehenen Oberflächen eines Werkstücks aus gepresstem Holzwerkstoff, umfassend:
- eine Klebstoff-Spritzvorrichtung (2) zum Auftragen von flüssigem Klebstoff auf die zu beleimende Oberfläche des Werkstücks,
- einen Roboter (1), der die Klebstoff-Spritzvorrichtung (2) über die zu beleimende Oberfläche des Werkstücks führt,
- eine Transportvorrichtung (3) zum Transportieren von auf diese aufgelegten Werkstücken zu einer am Roboter (1) angeordneten Beleimungsstation (6) und von dieser weg,
- eine Abtastvorrichtung (8) zum Abtasten der Kontur und zum Detektieren von Konturdaten der auf der Transportvorrichtung (3) aufliegenden und zur Beleimungsstation (6) zu transportierenden Werkstücke,
- sowie eine Steuereinheit (11) zum Steuern des Roboters (1) und der Klebstoff-Spritzvorrichtung (2),
- wobei die Steuereinheit (11) mit der Abtastvorrichtung (8) verbunden ist und die Klebstoff-Spritzvorrichtung (2) sowie den Roboter (1) anhand der von der Abtastvorrichtung (8) erhaltenen Konturdaten steuert,
**dadurch gekennzeichnet,**
- **dass** die Abtastvorrichtung (8) außer der Kontur der Werkstücke auch deren Topographie abtastet und Topographie-Daten detektiert,
- während die Steuereinheit (11) die Klebstoff-Spritzvorrichtung (2) und den Roboter (1) anhand der Topographie-Daten steuert.

2. Anlage nach Anspruch 1,
**dadurch gekennzeichnet,**
**dass** die Abtastvorrichtung (8) eine Laser-Scanvorrichtung ist.

3. Anlage nach einem der Ansprüche 1 oder 2,
**dadurch gekennzeichnet,**
**dass** der Roboter (1) ein Knickarm-Roboter mit mindestens fünf Freiheitsgraden ist.

4. Anlage nach mindestens einem der Ansprüche 1-3,
**dadurch gekennzeichnet,**
**dass** die Abtastvorrichtung (8) aus den Topographie-Daten Bilddaten zur Erzeugung eines Topographie-Bildes des Werkstücks generiert.

5. Anlage nach Anspruch 4,
**dadurch gekennzeichnet,**
**dass** die Steuereinheit (11) den von der Abtastvorrichtung (8) erhaltenen Bilddaten Ortskoordinaten zur Steuerung des Roboters (1) zuordnet und ein entsprechendes Steuerprogramm für den Roboter (1) und/oder die Klebstoff-Spritzvorrichtung (2) generiert.

6. Anlage nach mindestens einem der Ansprüche 1-5,
**dadurch gekennzeichnet,**
**dass** die Steuereinheit (11) die Klebstoff-Spritzvorrichtung (2) und/oder die Bewegung des Roboters (1) mittels der Topographie-Daten so steuert, dass die auf die zu beleimende Oberfläche des Werkstücks aufgetragene Klebstoffmenge entsprechend dessen Topographie variiert.

7. Anlage nach Anspruch 6,
**dadurch gekennzeichnet,**
**dass** die Steuereinheit (11) die Klebstoff-Spritzvorrichtung (2) und/oder die Bewegung des Roboters (1) mittels der Topographie-Daten so steuert, dass in Vertiefungen in der zu beleimenden Oberfläche des Werkstücks ein erhöhter Klebstoffauftrag erfolgt.

8. Anlage nach mindestens einem der Ansprüche 1-7,
**dadurch gekennzeichnet,**
**dass** der Roboter (1) und die Beleimungsstation (6) mit einer Umhausung (9) versehen sind.

9. Anlage nach Anspruch 8,
**dadurch gekennzeichnet,**
**dass** die Beleimungsstation (6) mit einer Klebstoffabsaugung (7) für Overspray versehen ist.

10. Anlagen nach mindestens einem der Ansprüche 1-9,
**dadurch gekennzeichnet,**
**dass** die Transportvorrichtung (3) im Wesentlichen aus einem Tisch (4) besteht, der zwischen einer Beladungsstation (5) und der Beleimungsstation (6) verfahrbar ist.

11. Anlage nach Anspruch 10,
**dadurch gekennzeichnet,**
**dass** zwei Tische (4, 4') vorgesehen sind, die abwechselnd zur Beleimungsstation (6) verfahrbar sind.
